# EUROPEAN PATENT SPECIFICATION

(11) **EP 2 181 902 B1**
(45) Date of publication and mention of the grant of the patent: **17.08.2016**
(21) Application number: 09174291.6
(22) Date of filing: 28.10.2009
(51) Int. Cl.: B60S 3/06

(54) **Double-gantry car wash installation, and corresponding method**
Doppelportal-Autowaschinstallation und zugehöriges Verfahren
Installation de lavage de voiture à double portique, et procédé correspondant

(30) Priority: 30.10.2008 IT MI20080038
(43) Date of publication of application: 05.05.2010
(73) Proprietor: Autoequip Lavaggi S.p.A., 14059 Vesime (AT) (IT)
(72) Inventor: Marengo, Ferruccio, 14059, VESIME (AT) (IT); Ferrino, Massimo, 14059, VESIME (AT) (IT); Brusco, Mauro, 14059, VESIME (AT) (IT)
(74) Representative: Minoja, Fabrizio

(56) References cited:
- EP-A2- 1 621 428
- DE-A1-102006 002 794
- DE-A1-102006 017 991
- DE-U1- 29 816 527
- FR-A1- 2 851 978
- US-A1- 2005 268 411

## Description

This invention relates to a double-gantry car wash installation equipped with two pairs of vertical brushes or other devices for brushing the sides of the vehicle, and a horizontal brush, wherein high-pressure water nozzles are fitted on one of the two gantries and emollient dispensing nozzles on the other.

In particular, the installation according to the invention comprises a first gantry fitted with devices for dispensing an emollient substance, a pair of vertical brushes or other devices for brushing the sides of the vehicle, and vehicle drying devices, while a second gantry is fitted with devices for spraying high-pressure washing water, a pair of vertical brushes, a horizontal brush, and vehicle drying devices.

This configuration allows much shorter washing cycles than known installations (for example, a complete washing cycle, comprising the supply of the emollient product, high-pressure washing, brushing and drying, can be performed with a single forward and return pass of the two gantries), and improves washing efficiency due to the use of two pairs of vertical brushes to clean the sides, front and rear of the vehicle.

Vehicle washing installations, and especially car washes, are divided into two main categories: fixed-gantry installations, constituted by a tunnel along which the car advances and inside which the various washing systems are located; and mobile-gantry installations, in which the vehicle remains stationary while the supporting structure of the washing systems moves forwards and backwards to perform the various operations included in the washing cycle.

The present invention relates to this second type of car wash.

Mobile-gantry car washes are divided into two main categories: single-gantry and multiple-gantry installations.

In single-gantry installations, all the devices, rotary brushes, high-pressure water-spraying nozzles, wheel brushes, rinsing water spraying systems and drying units that direct pressurised air onto the vehicle are mounted on the same gantry-shaped structure, which advances, bringing the various devices in succession to the vehicle to be washed. Said installations with a single mobile gantry have the advantage of being more compact than the others, but washing times are rather lengthy because the gantry must make at least six passes in order to perform all the specified operations.

The need for higher productivity has led to the study of solutions which shorten treatment cycles, so that more washes can be performed in a given period of time.

These studies have led to the introduction of double-gantry installations, which offer a considerable time saving because the vehicle washing cycle can begin while the drying devices on the separate gantry are drying the previously washed vehicle.

Double-gantry installations generally comprise a first structure, called the drying gantry, which carries emollient liquid spraying and distribution arches, top and side nozzles for spraying pressurised water, and drying devices that direct a strong jet of air onto the vehicle. The second gantry is equipped with rotary brushes which perform mechanical washing of the vehicle, and rinsing devices which spray rinsing water, wax or the like onto the vehicle.

In double-gantry systems, the cycle comprises:
a first forward pass of the drying gantry, which sprays emollient onto the vehicle;
   - a return pass with spraying of high-pressure washing water;
   - a second forward pass in which both gantries move together, with brushing and activation of the wheel washers and high-pressure water-spraying systems fitted to the drying gantry;
   - a return pass of both gantries, with brushing followed by rinsing with water performed by the washing gantry, followed by a slow drying stage performed by the systems fitted to the drying gantry.

To shorten washing times even more, this applicant has developed an installation covered by patent application PC 2003 A 048 of 29 October 2003, which discloses a double-gantry washing installation wherein the high-pressure water-spraying devices are located on the washing gantry rather than the drying gantry, as in known double-gantry systems.

Recently, however, single-gantry installations are being marketed which, in addition to all the other devices, are fitted with two pairs of vertical brushes, rather than one pair as in all previous installations.

These installations, thus configured, considerably improve the quality of washing, because the same effect can be obtained with a single brushing pass as with two passes by systems equipped with a single pair of vertical brushes.

Although said installations guarantee a good result even with a single brushing pass, they still suffer from the problems associated with the presence of a single gantry: at least four gantry passes are required to perform a complete washing cycle with emollient and spraying of high-pressure water.

Among the solutions at present known in this sector, there are also mentioned the vehicle washing apparatus, of the fixed-gantry or tunnel type, that is disclosed by document US 2006/268411 A1, and the double-gantry car wash installation that is disclosed by patent document EP 1 621 428 A2.

However also the embodiments and solutions that are disclosed by the above patent documents appear to require further improvements and in particular to expand their performances and functions in order to improve the washing of a vehicle.

To eliminate said problems of the known systems, this invention offers a double-gantry car-wash installation equipped with two pairs of brushes for washing the sides of the vehicle, characterised in that it comprises a first gantry fitted with devices for dispensing an emollient substance, a pair of vertical brushes or other devices for brushing the sides of the vehicle, wheel-washers and vehicle drying devices, while a second gantry is fitted with devices for spraying high-pressure washing water, a pair of brushes for washing the sides of the vehicle, a horizontal brush, and vehicle drying devices.

This invention will be better understood from the detailed description that follows, provided by way of example but not of limitation, by reference to the annexed figures wherein:
- figure 1 is a schematic side view of a car wash according to the invention;
- figures 2a to 2d schematically illustrate the sequence of operations of a washing cycle performed by an installation according to the invention.

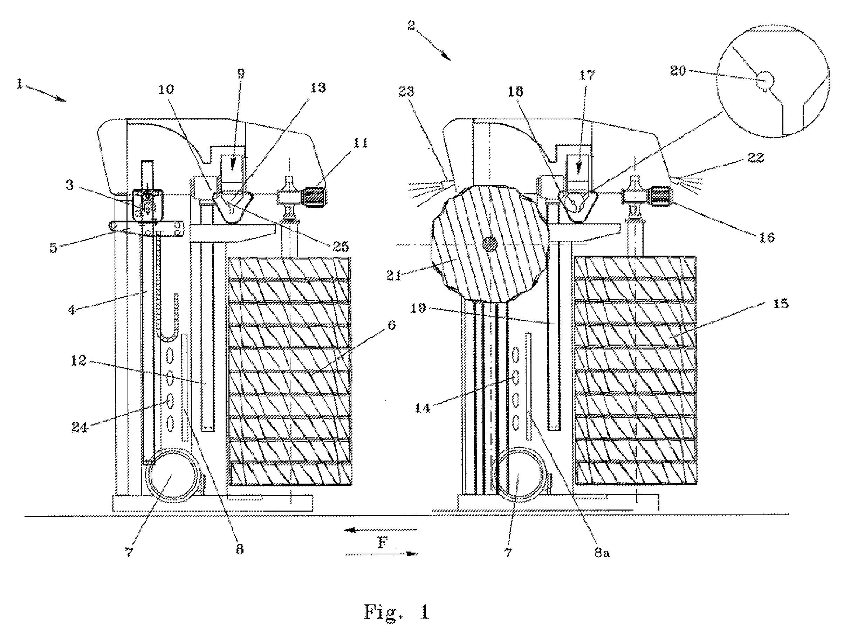

In figure 1, the car wash according to the invention comprises a first gantry 1 and a second gantry 2, which move in the direction of arrow F along a track on which the vehicles to be washed are positioned.

Gantry 1 is fitted with an emollient product spraying arch 3, which moves along vertical guides 4. A scanning device 5 equipped with through-beam photocells also runs along said guides; said photocells detect and store the contours of the vehicle with the aid of a pair of encoders, not illustrated, which detect the position of the photocells moment by moment. Alternatively, said arc 3 can also be mounted fixed to the upper part of gantry 1.

Said encoders, which are connected to the motors that move the gantry along the track and move support 3 along guides 4, send data to a control computer which will be associated with the data obtained from the photocells to determine the contours of the vehicle.

Gantry 1 is also fitted with a pair of vertical brushes 6, driven by gear motors 11, a wheel-washing device 7, constituted by a rotating circular brush, a lateral drying device 8, and a horizontal drying unit 9 which can be mounted on a support 10 and runs on guides 12, which allows said unit to traverse vertically to follow the contours of the vehicle and to incline outlet 13 so as to direct the air jet during the drying stage.

Said drying unit can alternatively comprise one or more oscillating outlets, not shown in the figure, which are fixed to the upper part of the gantry or traverse both horizontally and vertically.

A lateral high-pressure system 14, which sprays water from each side of the track, a pair of vertical brushes 15 driven by motors 16, a wheel-washing device 7, a horizontal drying unit 17 mounted on a support 18, which runs on guides 19, like the one on gantry 1, to which is also fitted a horizontal channel 20 for spraying pressurised water, equipped with fixed or oscillating nozzles, which moves together with said unit 17 and is controlled so that it follows the contours of the vehicle according to the data recorded by the through-beam photocells on gantry 1, are fitted to gantry 2, in that order. Finally, the washing gantry is fitted with a horizontal brush 21, which also moves vertically, and a lateral drying device 8.

Gantry 2 is also fitted, at the front and back respectively, with a plurality of nozzles 22 for wetting or dispensing of a washing product for the brushes or wax, and nozzles 23 for wetting or dispensing of wax or a polishing product.

Optionally, gantry 1 can be fitted with a lateral high-pressure unit 24 and a high-pressure horizontal channel 25, equipped with fixed or oscillating nozzles, like those fitted on gantry 2.

According to a second embodiment of the invention, gantry 1 is fitted, instead of the two vertical brushes 6, with two or more pairs of oval brushes, described in European patent EP 0407695 filed by the same applicant, rotating on substantially horizontal axes and arranged longitudinally to the direction of the vehicle.

An installation like the one just described, ie. equipped with vertical brushes on both gantries or a pair of vertical brushes on one gantry and two or more pairs of oval brushes on the other gantry, can perform a variety of washing cycles to meet all users' needs, from rapid washing to more thorough washing; at present, said needs are only partly met by the installations according to the prior art, which guarantee a comparable washing speed in the case of double-gantry installations, but with an inferior quality of washing due to the presence of only two vertical brushes, or a comparable quality of washing in the case of single-gantry installations with four vertical brushes, but longer cycle times for the same washing programme.

Disclosed below are just a few examples of washing cycles which can be performed with the installation according to the invention.

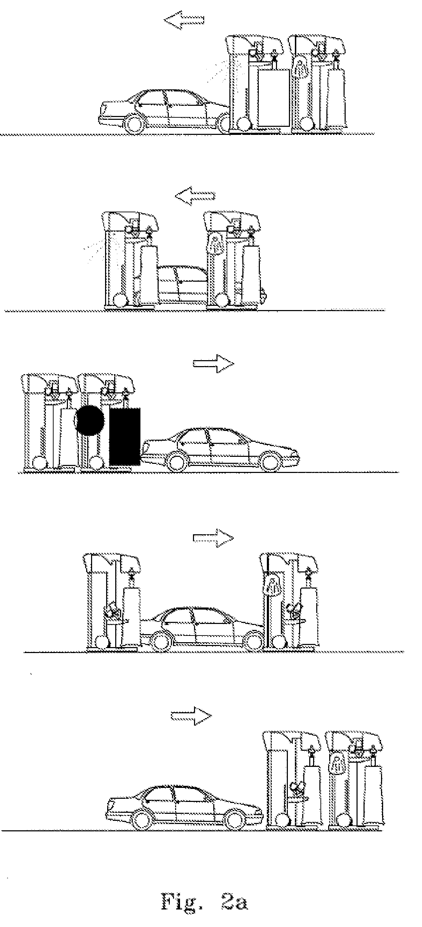

A complete washing cycle which comprises the following stages is described, by reference to figure 2a:

### 1) forward pass of gantry 1

- spraying of an emollient or detergent product by spraying arch 3 and simultaneous scanning of the vehicle contour by photocells 5, which move along guides 4;
- wheel washing by unit 7

### 2) forward pass of gantry 2

- spraying of high-pressure washing water by lateral spraying devices 14 to remove debris and parts which could scratch the bodywork as a result of the mechanical action of the brushes;
- high-pressure spraying of washing water by horizontal channel 20;
- wheel washing by unit 7;

### 3) return pass of gantry 2

- spraying of a detergent product for the brushes by nozzles 22;
- brushing by horizontal brush 21;
- brushing of sides by vertical brushes 15;
- spraying of wax or a polishing product by nozzles 23;

### 4) return pass of gantry 1

- drying by horizontal drying unit 9, or other oscillating and/or traversing devices, and subsequently by vertical drying unit 8.

The cycle just described is highly advantageous because it allows a complete washing cycle to be performed with emollient, lateral and horizontal high pressure, brushing, wheel washing, waxing and drying, with a single forward and return pass of the two gantries.

However, single-gantry installations, whether fitted with two or four vertical brushes, require a forward and return pass merely for emollient dispensing and high pressure, because if the high-pressure water were sprayed during the forward pass at the same time as the supply of emollient, the emollient would be washed away immediately, with no time to perform its action in depth.

In some cases, if a single brushing pass is insufficient, the cycle described above could be varied, with the same number of passes by the gantries, or a larger number.

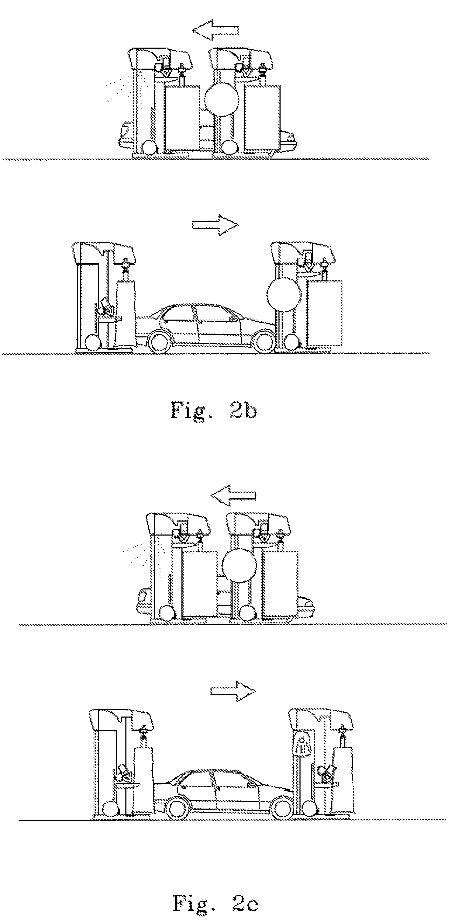

A washing cycle which comprises the following stages is described, by reference to figure 2b:

### 1) forward pass of gantry 1

- high-pressure spraying of washing water by lateral spraying devices 24;
- high-pressure spraying of washing water by horizontal channel 25, or with an upper oscillating device not illustrated in the figure;
- brushing of sides by vertical brushes 6;

### 2) forward pass of gantry 2

- brushing of sides by vertical brushes 15;
- brushing by horizontal brush 21;

### 3) return pass of gantry 2

- brushing of sides by vertical brushes 15;
- brushing by horizontal brush 21;
- spraying of wax or a polishing product by nozzles 23;

### 4) return pass of gantry 1

- drying by horizontal drying unit 9, and subsequently by vertical drying unit 8.

A washing cycle which comprises the following stages is described, by reference to figure 2c:

### 1) forward pass of gantry 1

- high-pressure spraying of washing water by lateral spraying devices 24;
- spraying of high-pressure washing water by horizontal channel 25, or with an upper oscillating device not illustrated in the figure;
- brushing of sides by vertical brushes 6;

### 2) forward pass of gantry 2

- brushing of sides by vertical brushes 15;
- brushing by horizontal brush 21;

### 3) return pass of gantry 2

- drying by horizontal drying unit 17 and lateral drying unit 8a;

### 4) return pass of gantry 1

- drying by horizontal drying unit 9, and subsequently by vertical drying unit 8.

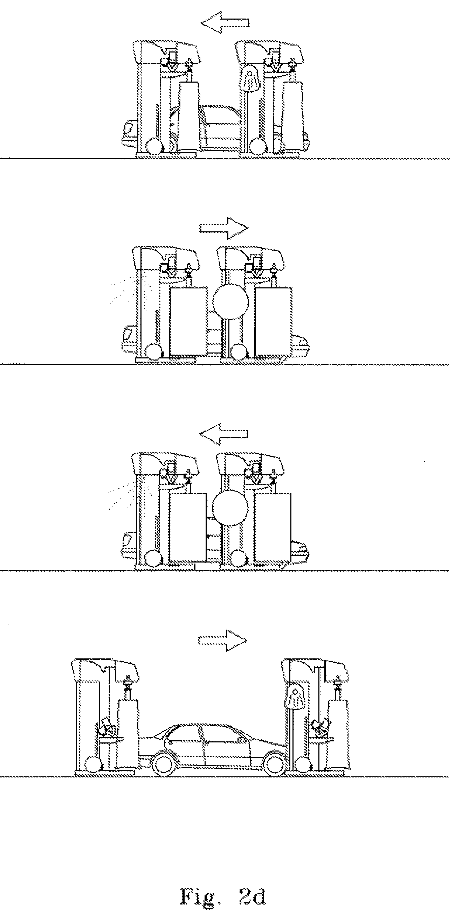

A complete washing cycle which comprises the following stages is described, by reference to figure 2d:

### 1) first forward pass of gantry 1

- spraying of an emollient or detergent product by spraying arch 3 and simultaneous scanning of the vehicle contour by photocells 5, which move along guides 4;
- wheel washing by unit 7;

### 2) first forward pass of gantry 2

- high-pressure spraying of washing water by lateral spraying devices 14;
- high-pressure spraying of washing water by horizontal channel 20;
- wheel washing by unit 7;

### 3) firstU return pass of gantry 2

- spraying of a detergent product for the brushes by nozzles 22;
- brushing by horizontal brush 21;
- brushing of sides by vertical brushes 15;

### 4) first return pass of gantry 1

- brushing of sides by vertical brushes 15;

### 5) Second forward pass of gantry 1

- brushing of sides by vertical brushes 15;

### 6) Second forward pass of gantry 2

- spraying of a detergent product for the brushes by nozzles 22;
- brushing by horizontal brush 21;
- brushing of sides by vertical brushes 15;
- spraying of wax or a polishing product by nozzles 23;

### 7) Second return pass of gantry 2

- drying by horizontal drying unit 17 and lateral drying unit 8a;

### 8) Second return pass of gantry 1

- drying by horizontal drying unit 9, and subsequently by vertical drying unit 8.

This last, very thorough washing cycle only requires two forward and return passes, and is comparable with a cycle consisting of three forward and return passes by a single-gantry installation with four vertical brushes, or even four forward and return passes by a single-gantry installation with two vertical brushes.

If there is no need to perform a complete washing cycle or accelerate the washing cycle, gantry 1 can be retracted to a non-operational position, and gantry 2 used alone as a single-gantry installation. This not only provides energy savings compared with the examples previously described, but also confirms the great versatility of the installation made according to this invention.

## Claims

1. Double-gantry car wash installation, comprising two gantries (1, 2) adapted to move, forwards and backwards to perform the various operations included in the washing cycle **characterised in that** brushing means designed to brush the lateral surface of the car are fitted to both gantries (1, 2),
**in that** said brushing means designed for brushing the lateral surface of the car consist of two pairs (6, 15) of vertical brushes, each fitted to a respective one of said gantries (1, 2), and
**in that:**
• a first gantry (1) of said two gantries is fitted with:
- devices (5) designed to scan the contour of the car, which move along vertical guides (4);
- a first pair of vertical brushes (6);
- devices (3) designed to dispense a pre-washing substance such as an emollient;
- means (24, 25) designed to spray water at high pressure laterally and onto the car from above;
- drying devices (8, 9) designed to direct jets of pressurised air laterally and onto the car from above, and
• a second gantry (2) of said two gantries is fitted with:
- means (14) designed to spray water at high pressure laterally and onto the car from above;
- means (22, 23) designed to dispense a washing product for the brushes or wax, or wetting and rinsing water.
- a second pair of vertical brushes (15);
- a horizontal brush (21);
- wheel-washing brushes (7).

2. Double-gantry car wash installation adapted to move forwards and backwards to perform the various operations included in the washing cycle **characterised in that** said brushing means designed for brushing the lateral surface of the car are fitted to both gantries and consist of one or more pairs of oval brushes fitted to a first gantry which rotate along a substantially horizontal axis in the direction of advancement of the gantries, and a pair of vertical brushes fitted to a second gantry. and **in that**:
• a first gantry of said two gantries is fitted with:
- devices designed to scan the contour of the car, which move along vertical guides;
- one or more pairs of oval brushes which rotate along a substantially horizontal axis in the direction of advance of the gantries;
- devices designed to dispense a pre-washing substance such as an emollient;
- means designed to spray water at high pressure laterally and onto the car from above;
- drying devices designed to direct jets of pressurised air laterally and onto the car from above, and
• a second gantry of said two gantries is fitted with:
- means designed to spray water at high pressure laterally and onto the car from above;
- means designed to dispense a washing product for the brushes or wax, or wetting and rinsing water.
- a pair of vertical brushes;
- a horizontal brush;
- wheel-washing brushes.
- drying devices designed to direct jets of pressurised air laterally and downwards onto the car.

3. Car washing method using an installation as claimed in any of the preceding claims, **characterised in that** it includes the following stages:
• forward pass of a first gantry (1),
- spraying of an emollient or detergent product and simultaneous scanning of the contours of the car;
- wheel brushing
• forward pass of a second gantry (2),
- spraying of water at high pressure laterally and onto the car from above;
- wheel washing;
• return pass of the second gantry (2),
- spraying of a detergent product for the brushes;
- brushing by a horizontal brush (21);
- brushing of the lateral surface of the car by vertical brushes (15);
- spraying of wax or polishing product; and
• during a return pass of the first gantry (1),
- drying by devices (9) designed to direct jets of pressurised air laterally and onto the car from above.

4. Car washing method using an installation as claimed in any of claims 1 to 2, including the following stages:
• first forward pass of a first gantry (1),
- spraying of an emollient or detergent product by spraying arch (3) and simultaneous scanning of contour of the car;
- wheel washing by unit (7);
• first forward pass of a second gantry (2),
- high pressure spraying of washing water at high-pressure by lateral spraying devices (14) onto the car;
- high pressure spraying of washing water at high-pressure by a horizontal channel (20); wheel washing by unit (7);
• first return pass of the second gantry (2),
- spraying of a detergent product for the brushes by nozzles (22);
- brushing by a horizontal brush (21);
- brushing of the sides of the car by vertical brushes (15);
• first return pass of the first gantry (1),
- brushing of the sides of the car by the vertical brushes (6);
• second forward pass of the first gantry (1),
- brushing of the sides of the car by the vertical brushes (6);
• second forward pass of the second gantry (2),
- spraying of a detergent product for the brushes by the nozzles (22);
- brushing by the horizontal brush (21);
- brushing of the sides of the car by the vertical brushes (15);
- spraying of wax or a polishing product by nozzles (23);
• second return pass of the second gantry (2),
- drying by a horizontal drying unit (17) and a lateral drying unit (8a); and
• second return pass of the first gantry (1),
- drying by a horizontal drying unit (9), and subsequently by a vertical drying unit (8).

## Patentansprüche

1. Autowaschanlage mit doppeltem Gerüst, aufweisend zwei Gerüste (1, 2), welche zum Bewegen nach vorne und nach hinten eingerichtet sind, um die verschiedenen in dem Waschzyklus auftretenden Arbeitsabläufe durchzuführen,
**dadurch charakterisiert, dass**
ein Mittel zum Bürsten, welches zum Bürsten der Lateralseite des Autos ausgestaltet ist, an beiden Gerüsten (1, 2) angepasst ist,
**dass** das Mittel zum Bürsten, welches zum Bürsten der Lateralseite des Autos ausgestaltet ist, aus zwei Paaren (6, 15) an vertikal ausgerichteten Bürsten besteht, wobei jede an ein entsprechendes der Gerüste (1, 2) angepasst ist, und
**dass**
• ein erstes Gerüst (1) der zwei Gerüste angepasst ist an:
- Vorrichtungen (5), welche zum Abtasten der Kontur des Autos ausgestaltet sind, die sich entlang vertikal ausgerichteter Führelemente (4) bewegen;
- ein erstes Paar an vertikal ausgerichteten Bürsten (6) ;
- Vorrichtungen (3), welche zum Abgeben einer Vorwaschsubstanz, wie zum Beispiel einem Weichmacher, ausgestaltet sind;
- ein Mittel (24, 25), welches zum Sprühen von Wasser bei hohem Druck in lateraler Weise und auf das Auto von oben ausgestaltet ist;
- Trocknungsvorrichtungen (8, 9), welche ausgestaltet sind, um Druckluftstrahlen in laterale Weise und auf das Auto von oben zu richten, und
• ein zweites Gerüst (2) der zwei Gerüste angepasst ist an:
- ein Mittel (14), welches zum Sprühen von Wasser bei hohem Druck in lateraler Weise und auf das Auto von oben ausgestaltet ist;
- ein Mittel (22, 23), welches zum Abgeben eines Waschmittels für die Bürsten oder von Wachs oder eines Befeuchtungs- und Spülwassers ausgestaltet ist;
- ein zweites Paar an vertikal ausgerichteten Bürsten (15) ;
- eine horizontal ausgerichtete Bürste (21);
- Räder waschende Bürsten (7).

2. Autowaschanlage mit doppeltem Gerüst, welche zum Bewegen nach vorne und nach hinten eingerichtet ist, um die verschiedenen in dem Waschzyklus auftretenden Arbeitsabläufe durchzuführen,
**dadurch gekennzeichnet, dass**
das Mittel zum Bürsten, welches zum Bürsten der lateralen Autoseite ausgestaltet ist, an beide Gerüste angepasst ist und aus einem oder mehreren Paaren an ovalen, an ein erstes Gerüst angepassten Bürsten, welche entlang einer im Wesentlichen horizontal ausgerichteten Achse in der Richtung des Fortschreitens der Gerüste rotieren, und einem Paar an vertikal ausgerichteten Bürsten, welche an ein zweites Gerüst angepasst sind, besteht
sowie dadurch, dass
• ein erstes Gerüst der zwei Gerüste angepasst ist an:
- Vorrichtungen, welche zum Abtasten der Kontur des Autos ausgestaltet sind, welche sich entlang vertikal ausgerichteter Führelemente bewegen;
- ein oder mehrere Paare von ovalen Bürsten, welche entlang einer im Wesentlichen horizontal ausgerichteten Achse in der Richtung des Fortschreitens der Gerüste rotieren;
- Vorrichtungen, welche zum Abgeben einer Vorwaschsubstanz, wie zum Beispiel einem Weichmacher, ausgestaltet sind;
- ein Mittel, welches zum Sprühen von Wasser bei hohem Druck in lateraler Weise und auf das Auto von oben ausgestaltet ist;
- Trocknungsvorrichtungen, welche ausgestaltet sind, um Strahlen an Druckluft in lateraler Weise und auf das Auto von oben zu richten, und
• ein zweites Gerüst der zwei Gerüste angepasst ist an:
- ein Mittel, welches zum Sprühen von Wasser bei hohem Druck in lateraler Weise und auf das Auto von oben ausgestaltet ist;
- ein Mittel, welches ausgestaltet ist, um ein Waschmittel für die Bürsten oder Wachs oder ein Befeuchtungs- und Spülwasser abzugeben;
- ein Paar an vertikal ausgerichteten Bürsten;
- eine horizontal ausgerichtete Bürste;
- Räder waschende Bürsten;
- Trocknungsvorrichtungen, welche ausgestaltet sind, um Strahlen an Druckluft in lateraler Weise und nach unten auf das Auto zu richten.

3. Autowaschverfahren unter Verwendung einer gemäß einem der vorhergehenden Ansprüche beanspruchten Anlage, **dadurch gekennzeichnet, dass** es die folgenden Schritte aufweist:
• nach vorne Führen eines ersten Gerüsts (1),
- Sprühen eines Weichmachers oder eines Waschmittelfabrikats und gleichzeitiges Abtasten der Kontur des Autos;
- Radbürstung;
• nach vorne Führen eines zweiten Gerüsts (2),
- Sprühen von Wasser bei hohem Druck in lateraler Weise und auf das Auto von oben;
- Radwaschung;
• Zurückführen des zweiten Gerüsts (2),
- Sprühen eines für die Bürsten vorgesehenen Waschmittelfabrikats;
- Bürsten durch eine horizontal ausgerichtete Bürste (21);
- Bürsten der Lateralfläche des Autos durch vertikal ausgerichtete Bürsten (15);
- Sprühen von Wachs oder eines Polierfabrikats; und
• während eines Zurückführens des ersten Geräts (1),
- Trocknen durch Vorrichtungen (9), welche ausgestaltet sind, um Strahlen von Druckluft in lateraler Weise und auf das Auto von oben zu richten.

4. Autowaschverfahren unter Verwendung einer gemäß einem der Ansprüche 1 bis 2 beanspruchten Anlage, aufweisend die folgenden Schritte:
• erstes vorwärts Führen eines ersten Gerüsts (1),
- Sprühen eines Weichmachers oder Waschmittelfabrikats durch einen Sprühbogen (3) und gleichzeitigem Abtasten einer Kontur des Autos;
- Radwaschung durch Bauteil (7)
• erstes vorwärts Führen eines zweiten Gerüsts (2),
- Hochdrucksprühen von Wasser zum Waschen auf das Auto bei hohem Druck durch seitliche Sprühvorrichtungen (14);
- Hochdrucksprühen von Wasser zum Waschen bei hohem Druck durch einen horizontal ausgerichteten Kanal (20); Radwaschung durch Bauteil (7);
• erstes Zurückführen des zweiten Gerüsts (2),
- Sprühen eines für die Bürsten vorgesehenen Waschmittelfabrikats durch Düsen (22);
- Bürsten durch eine horizontal ausgerichtete Bürste (21);
- Bürsten der Seiten des Autos durch vertikal ausgerichtete Bürsten (15);
• erstes Zurückführen des ersten Gerüsts (1),
- Bürsten der Seiten des Autos durch die vertikal ausgerichteten Bürsten (6);
• zweites vorwärts Führen des ersten Gerüsts (1),
- Bürsten der Seiten des Autos durch die vertikal ausgerichteten Bürsten (6);
• zweites vorwärts Führen des zweiten Gerüsts (2),
- Sprühen eines für die Bürsten vorgesehenen Waschmittelfabrikats durch die Düsen (22);
- Bürsten durch die horizontal ausgerichtete Bürste (21);
- Bürsten der Seiten des Autos durch die vertikal ausgerichteten Bürsten (15);
- Sprühen von Wachs oder eines Polierfabrikats durch Düsen (23) ;
• zweites Zurückführen des zweiten Gerüsts (2),
- Trocknen durch ein horizontal ausgerichtetes Trocknungsbauteil (17) und ein seitliches Trocknungsbauteil (8a); und
• zweites Zurückführen des ersten Gerüsts (1),
- Trocknen durch ein horizontal ausgerichtetes Trocknungsbauteil (9), und nachfolgend durch ein vertikal ausgerichtetes Trocknungsbauteil (8).

## Revendications

1. Installation de lavage de véhicule à double portique, comprenant deux portiques (1, 2) adaptés afin de se déplacer en avant et en arrière pour exécuter les différentes opérations comprises dans le cycle de lavage, **caractérisée en ce que** des moyens de brossage conçus afin de brosser la surface latérale du véhicule sont montés sur les deux portiques (1, 2), **en ce que** lesdits moyens de brossage conçus afin de brosser la surface latérale du véhicule consistent en deux paires (6, 15) de brosses verticales, chacune montée sur un portique respectif (1, 2), et **en ce que :**
• un premier portique (1) desdits deux portiques est équipé :
- de dispositifs (5) conçus afin de scanner le contour du véhicule, lesquels se déplacent le long de guides verticaux (4) ;
d'une première paire de brosses verticales (6) ;
- de dispositifs (3) conçus afin d'épandre une substance de prélavage comme un émollient ;
- de moyens (24, 25) conçus afin de pulvériser de l'eau à haute pression latéralement et sur le véhicule par le dessus ;
- de dispositifs de séchage (8, 9) conçus afin de diriger des jets d'air comprimé latéralement et sur le véhicule par le dessus, et
• un deuxième portique (2) desdits deux portiques est équipé de :
- de moyens (14) conçus afin de pulvériser de l'eau à haute pression latéralement et sur le véhicule par le dessus ;
- de moyens (22, 23) conçus afin d'épandre un produit de lavage pour les brosses ou une cire, ou de l'eau de mouillage et de rinçage.
- d'une deuxième paire de brosses verticales (15) ;
- d'une brosse horizontale (21) ;
- de brosses pour le lavage des roues (7).

2. Installation de lavage de véhicule à double portique, appropriée afin de se déplacer vers l'avant et vers l'arrière afin d'exécuter les différentes opérations comprises dans le cycle de lavage, **caractérisée en ce que** lesdits moyens de brossage conçus afin de brosser la surface latérale du véhicule sont montés sur les deux portiques et consistent en une ou plusieurs paires de brosses ovales montées sur un premier portique et qui tournent autour d'un axe substantiellement horizontal dans le sens de progression des portiques, et en une paire de brosses verticales montées sur un deuxième portique. et **en ce que** :
• un premier portique desdits deux portiques est équipé :
- de dispositifs conçus afin de scanner le contour du véhicule, lesquels se déplacent le long de guides verticaux ;
- d'une ou de plusieurs paires de brosses ovales qui tournent autour d'un axe substantiellement horizontal dans le sens de progression des portiques ;
- de dispositifs conçus afin d'épandre une substance de prélavage comme un émollient ;
- de moyens conçus afin de pulvériser de l'eau à haute pression latéralement et sur le véhicule par le dessus ;
- de dispositifs de séchage conçus afin de diriger des jets d'air comprimé latéralement et sur le véhicule par le dessus, et
• un deuxième portique desdits deux portiques est équipé :
- de moyens conçus afin de pulvériser de l'eau à haute pression latéralement et sur le véhicule par le dessus ;
- de moyens conçus afin d'épandre un produit de lavage pour les brosses ou une cire, ou de l'eau de mouillage et de rinçage.
- d'une paire de brosses verticales ;
- d'une brosse horizontale ;
- de brosses pour le lavage des roues.
- de dispositifs de séchage conçus afin de diriger des jets d'air comprimé latéralement et sur le véhicule par le dessus.

3. Méthode de lavage de véhicule utilisant une installation telle que revendiquée à travers l'une quelconque des revendications précédentes, **caractérisée en ce qu'**elle englobe les étapes suivantes :
• déplacement du premier portique (1) vers l'avant,
- pulvérisation d'un émollient ou produit détergent et scan simultané des contours du véhicule ;
- brossage des roues
• déplacement d'un deuxième portique (2) vers l'avant,
- pulvérisation d'eau à haute pression latéralement et sur le véhicule par le dessus ;
- brossage des roues ;
• retour du deuxième portique (2),
- pulvérisation d'un produit détergent pour les brosses ;
- brossage par une brosse horizontale (21) ;
- brossage de la surface latérale du véhicule par les brosses verticales (15) ;
- pulvérisation de cire ou de produit lustrant ;
et
• durant un retour du premier portique (1),
- séchage par des dispositifs de séchage (9) conçus afin de diriger des jets d'air comprimé latéralement et sur le véhicule par le dessus.

4. Méthode de lavage de véhicule utilisant une installation telle que revendiquée à travers l'une quelconque des revendications 1 à 2, **caractérisée en ce qu'**elle englobe les étapes suivantes :
• premier déplacement du premier portique (1) vers l'avant,
- pulvérisation d'un émollient ou produit détergent par l'arche de pulvérisation (3) et scan simultané des contours du véhicule ;
- lavage des roues par l'unité (7) ;
• premier déplacement d'un deuxième portique (2) vers l'avant,
- pulvérisation à haute pression d'eau de lavage à haute pression par les dispositifs de pulvérisation latéraux (14) sur le véhicule ;
- pulvérisation à haute pression de l'eau de lavage à haute pression par un canal horizontal (20) ;
- lavage des roues par l'unité (7) ;
• premier retour du deuxième portique (2),
- pulvérisation d'un produit détergent pour les brosses par les buses (22) ;
- brossage par une brosse horizontale (21) ;
- brossage des flancs du véhicule par les brosses verticales (15) ;
• premier retour du premier portique (1),
- brossage des flancs du véhicule par les brosses verticales (6) ;
• deuxième déplacement du premier portique (1) vers l'avant,
- brossage des flancs du véhicule par les brosses verticales (6) ;
• deuxième déplacement du deuxième portique (2) vers l'avant,
- pulvérisation d'un produit détergent pour les brosses par les buses (22) ;
- brossage par une brosse horizontale (21) ;
- brossage des flancs du véhicule par les brosses verticales (15) ;
- pulvérisation de cire ou d'un produit lustrant par les buses (23) ;
• deuxième retour du deuxième portique (2),
- séchage par une unité de séchage horizontale (17) et une unité de séchage latérale (8a) ;
• deuxième retour du premier portique (1),
- séchage par une unité de séchage horizontale (9) et ensuite par une unité de séchage verticale (8).
